# EUROPÄISCHE PATENTSCHRIFT

(11) **EP 2 125 584 B1**
(45) Veröffentlichungstag und Bekanntmachung des Hinweises auf die Patenterteilung: **03.08.2011**
(21) Anmeldenummer: 07858047.9
(22) Anmeldetag: 21.12.2007
(51) Int. Cl.: B65G 47/31, B65G 59/10

(54) **VORRICHTUNG ZUM ORIENTIEREN EINES BEHÄLTNISSES**
DEVICE FOR ORIENTING A RECEPTACLE
DISPOSITIF POUR ORIENTER UN RÉCIPIENT

(30) Priorität: 22.12.2006 DE 202006019399 U
(43) Veröffentlichungstag der Anmeldung: 02.12.2009
(73) Patentinhaber: ASS Elektronik GmbH, 67269 Grünstadt (DE)
(72) Erfinder: SEIDENSPINNER, Gunter, 67167 Erpolzheim (DE)
(74) Vertreter: Sommer, Peter
(86) Internationale Anmeldenummer: PCT/EP2007/064435
(87) Internationale Veröffentlichungsnummer: WO 2008/077934

(56) Entgegenhaltungen:
- NL-A- 7 406 273
- US-A- 4 066 174

## Beschreibung

Die Erfindung betrifft eine Vorrichtung zum Vereinzeln von mehreren zu einem Stapel ineinander gestapelten Behältnissen, insbesondere von Pipettierspitzen gemäß dem Oberbegritt des Anspruchs1. Die Vorrichtung zum Vereinzeln weist eine Zuführeinrichtung mit einem Zuführelement für den Stapel und eine in einer Förderrichtung hinter der Zuführeinrichtung angeordnete Transporteinrichtung mit einem Transportmittel für das vereinzelte Behältnis auf.

Es sind verschiedenste Vorrichtungen zum Vereinzeln von mehreren zu einem Stapel ineinander gestapelten Behältnissen im Stand der Technik bekannt, etwa aus der US 4,364,466. Hier ist eine Vorrichtung zum Vereinzeln von mehreren zu einem Stapel ineinander gestapelten Dosenbodenstücken beschrieben. In horizontaler Förderrichtung ist hinter einer Zuführeinrichtung eine Transporteinrichtung vorgesehen, in die der Stapel von Dosenbodenstücken eingeführt wird. Für die Vereinzelung sind in der Transporteinrichtung zwei Förderbänder und zwei Transportrollen vorgesehen, die gleichzeitig reibschlüssig an dem Rand der Dosenbodenstücke angreifen. Dadurch, dass die effektive Transportgeschwindigkeit der Transportrollen kleiner ist als die Vorwärtsbewegung der Förderbänder, wird eine Vereinzelung der Dosenbodenstücke erreicht. Hierbei gleiten die zwei Förderbänder so lange über den Rand des jeweiligen Dosenbodenstücks, bis dieses von den Transportrollen frei gegeben wird. Danach wird das jeweilige Dosenbodenstück mit der Geschwindigkeit der zwei Förderbänder weiter transportiert und liegt hierzu reibschlüssig an den beiden Förderbändern an.

In der US 5,176,494 wird eine Vorrichtung zum Vereinzeln von mehreren zu einem Stapel ineinander gestapelten Containern beschrieben. Der Stapel von Containern wird zwischen zwei gegenüberliegenden Paaren von Förderbändern in vertikaler Richtung in die Förderstrecke einer Vereinzelungsvorrichtung eingeführt. Das untere Paar Förderbänder dreht schneller als das obere Paar Förderbänder. Der Abstand der in Bezug auf den Container jeweils gegenüberliegend angeordneten Förderbänder ist etwas kleiner als die Breite des Containers, sodass die Container reibschlüssig an den Förderbändern anliegen. Der Stapel wird zunächst mit der über die Wellen erzeugten Fördergeschwindigkeit durch das obere Paar Förderbänder entlang der Förderstrecke gefördert. Der jeweils untere Container wird bis auf die Höhe der Drehachse der Wellen gefördert. An diesem Punkt laufen die Förderbänder um ihre Drehscheibe und geben den jeweiligen Container seitlich frei und gleichzeitig greifen die schneller drehenden unteren Förderbänder ein, die über die Drehscheiben seitlich auf den Container zulaufen.

In der US 4,066,174 wird eine Vorrichtung zum veveinzeln von mehreren zu einem Stapel in einander gestapelten Behältnissen gemäß dem Oberbegraff des Auspruchs 1 beschrieben.

Die Aufgabe der Erfindung besteht darin, eine Vorrichtung zum Vereinzeln von mehreren zu einem Stapel ineinander gestapelten Behältnissen derart auszubilden und anzuordnen, dass die Förderung der Behältnisse ausreichend präzise und gleichzeitig weitgehend verschleißfrei erfolgt.

Erfindungsgemäß wird diese Aufgabe gelöst durch eine Vorrichtung gemäß Anspruch 1 sowie durch ein Verfahren gemäß Anspruch 8. Die abhängigen Ansprüche definieren bevorzugte und vorteilhafte Ausführungsformen der Erfindung. Hierdurch wird erreicht, dass das Behältnis erst nach der Freigabe durch das Zuführelement von dem Transportmittel erfasst und weiter transportiert und nicht gleichzeitig durch das Zuführelement und durch das Transportmittel mit unterschiedlichen Transportgeschwindigkeiten angetrieben wird. Da das Behältnis in Förderrichtung keine zwei unterschiedlichen Fördergeschwindigkeiten aufweisen kann, wird durch die erfindungsgemäße räumliche Trennung in Förderrichtung erreicht, dass es zwischen dem Zuführelement und dem Behältnis und zwischen dem Transportmittel und dem Behältnis nicht zu einem größerem Schlupf kommt. Ein geringer Mindestschlupf ist bei reibschlüssigen Antrieben immer vorhanden und nicht vermeidbar.

Die Fördergeschwindigkeit des Zuführelements ist somit völlig unbeeinflusst von der Fördergeschwindigkeit des Transportmittels und umgekehrt, da die beiden Fördermedien zu keinem Zeitpunkt der Förderung eines Behältnisses gleichzeitig an dem Behältnis angreifen. Dadurch kann zum einen die Fördergeschwindigkeit des jeweiligen Fördermediums exakt eingehalten werden und andererseits wird Schlupf und damit verbundener Verschleiß durch Reibung zwischen dem jeweiligen Fördermedium und dem Behältnis weites gehend vermieden. Schlupf und Reibung treten nämlich dann zwischen den Fördermedien und dem Behältnis in erhöhtem Maße auf, wenn das Behältnis durch ein Fördermedium gebremst und gleichzeitig durch ein anders Fördermedium angetrieben wird.

Vorteilhafterweise können das Zuführelement und/oder das Transportmittel das Behältnis zumindest im Bereich der Vereinzelung in Förderrichtung reib- und/oder formschlüssig transportieren. Da das Behältnis durch die erfindungsgemäße räumliche Trennung ohne wesentlichen Schlupf angetrieben wird, können bei einem rein reibschlüssigem Transport unterschiedliche Stapel von Behältnissen mit der gleichen Vorrichtung vereinzelt werden, weil der Eingriff des Transportmediums unabhängig von der Position oder der Länge des Behältnisses ist.

Vorteilhafterweise können als Zuführelement und/oder Fördermittel zwei mit gleicher Fördergeschwindigkeit antreibbare und in Bezug auf die Förderrichtung übereinander angeordnete Transportbänder vorgesehen sein. Durch den Einsatz von Transportbändern und Umlenkrollen wird ein einfacher reibschlüssiger Transport erreicht, bei dem die Freigabe durch das Zuführelement und das Erfassen durch das Transportmittel ohne regeltechnischen Aufwand durchführbar sind.

Hierzu kann vorteilhafterweise mindestens je eine Umlenkrolle für das Zuführelement und für das Transportmittel vorgesehen sein, wobei die Umlenkrolle für das Zuführelement in Förderrichtung neben einer Umlenkrolle für das Transportmittel angeordnet ist. Dadurch wird eine einfache Übergabe des Behältnisses von der Zuführeinrichtung zu der Transporteinrichtung erreicht, weil das Behältnis durch die beidseitige Führung von oben und von unten über die erfindungsgemäße Lücke geführt wird, die durch den Abstand gebildet wird.

Alternativ ist es vorteilhaft , dass das Behältnis auch unmittelbar durch die Umlenkrolle reib- und/oder formschlüssig in Förderrichtung transportiert werden kann. Im Bereich der Vereinzelung ist sowohl auf der Seite der Zuführeinrichtung als auch auf der Seite der Transporteinrichtung bei horizontaler Förderung eine obere und eine untere Umlenkrolle vorgesehen, zwischen denen das Behältnis reib- und/oder formschlüssig in Förderrichtung transportiert werden kann. Durch den Einsatz einer Umlenkrolle ohne Transportband kann die Förderrichtung unmittelbar nach der Vereinzelung geändert werden, weil die weitere Führung des Behältnisses durch das Transportband entfällt, sodass das Behältnis nicht weiter in Förderrichtung gefördert, sondern beispielsweise rechtwinklig zur Förderrichtung transportiert wird.

Vorteilhafterweise kann die Fördergeschwindigkeit Vt des Transportmittels und die Fördergeschwindigkeit Vz des Zuführelements in Abhängigkeit der Länge des Behältnisses und dem Abstand von jeweils zwei ineinander gestapelten Behältnissen eingestellt werden kann. Das Verhältnis Vt/Vz beträgt mindestens dem Wert 2 abzüglich dem Verhältnis der Länge des Behältnisses zu dem Abstand zweier Behältnisse im gestapelten Zustand. Formal gefasst heißt das: [Vt/Vz = 2-(Abstand 44/Länge 45)]. In den meisten Fällen wird das Verhältnis Vt/Vz größer gewählt, sodass jeweils zwei Behältnisse nicht nur vereinzelt sondern zusätzlich auch noch zueinander beabstandet werden.

Dabei ist die Fördergeschwindigkeit in Bezug auf Träger relevant, sodass beliebig lange Behältnisse abhängig von ihrem Abstand in gestapeltem Zustand in der gleichen Vorrichtung vereinzelt werden können.

Vorteilhafterweise kann die Vorrichtung einen Stapel von Behältnissen aufweisen, wobei das Behältnis in Bezug zu einer Mittelachse eine offene Seite und eine der offenen Seite gegenüberliegend angeordnete geschlossene Seite und einen in Bezug zu der Mittelachse radial umlaufenden äußeren Randbereich aufweist. Im Randbereich weist das Behältnis einen größten äußeren Durchmesser auf, sodass das Behältnis unabhängig von seiner Länge ausschließlich über den Randbereich transportiert wird. Dieses Merkmal hat auch zum Vorteil, dass beliebig lange Behältnisse mit der gleichen Vorrichtung vereinzelt werden können.

Hierbei ist es vorteilhaft, wenn der Randbereich oder Bund eine Breite aufweisen würde, über die der äußere Durchmesser annähernd konstant wäre und der Abstand größer wäre als die Breite des Randbereiches oder Bundes des Behältnisses. Dadurch ist es möglich, dass eine eingriffsfreie Übergabe des Behältnisses von der Zuführeinrichtung zu der Transporteinrichtung erfolgt, weil das Zuführelement nicht über den Randbereich oder Bund mit dem Transportmittel gekoppelt werden kann. Eingriffsfrei bedeutet, dass das Behältnis erst von dem Zuführelement frei gegeben wird, bevor es von dem in Träger nachfolgenden Transportmittel erfasst wird.

Vorteilhaft kann ein Verfahren zum Vereinzeln von Behältnissen mit einer Vorrichtung sein, wie sie vorstehend beschrieben ist. Das Verfahren weist folgende nacheinander ablaufende Verfahrensschritte auf:
a) ein Stapel von mindestens einem ersten und einem zweiten Behältnis wird durch ein Zuführelement einer Zuführeinrichtung einer Transporteinrichtung mit einem Transportmittel zugeführt, während der Stapel in Förderrichtung form- und/oder kraftschlüssig mit dem Zuführelement verbunden ist,
b) das in Förderrichtung erste Behältnis des Stapels wird von dem Zuführelement frei gegeben,
c) das von dem Zuführelement frei gegebene erste Behältnis wird durch das in derselben Förderrichtung folgende zweite Behältnis über einen Abstand zwischen dem Zuführelement und dem Transportmittel weiter in Förderrichtung transportiert,
d) das durch das zweite Behältnis weiter transportierte Behältnis wird von dem Transportmittel erfasst und weiter in Förderrichtung transportiert.

Vorteilhafterweise kann das Behältnis in Förderrichtung über einen äußeren Randbereich oder einen äußeren Bund form- und/oder kraftschlüssig mit dem Zuführelement oder mit dem Transportmittel in Verbindung stehen.

Vorteilhaft kann das Verfahren sein, wenn, während sich der Randbereich des ersten Behältnisses zwischen der frei gebenden ersten Position und der erfassenden zweiten Position befindet, das erste Behältnis in einer Richtung rechtwinklig zur Förderrichtung im zweiten Behältnis gelagert ist. Dadurch wird das Behältnis, das im Moment der Übergabe weder durch das Zuführelement noch durch das Transportmittel geführt ist, durch das nachfolgende zweite Behältnis geführt, in dem es ohnehin im gestapelten Zustand gelagert ist.

### Beschreibung der Zeichnung

In den Zeichnungen sind Ausführungsbeispiele der Erfindung dargestellt. Es zeigt die:
- Fig. 1: eine perspektivische Seitenansicht einer Vorrich- tung zum Vereinzeln von mehreren zu einem Stapel ineinander gestapelten Behältnissen in einem ers- ten Verfahrensschritt in einer ersten Sortier- richtung;
- Fig. 2: eine perspektivische Seitenansicht gemäß Fig. 1 in einem zweiten Verfahrensschritt;
- Fig. 3: eine perspektivische Seitenansicht gemäß Fig. 1 in einem dritten Verfahrensschritt;
- Fig. 4: eine Prinzipskizze des Abstandes zwischen der Zu- führeinrichtung und der Transporteinrichtung;
- Fig. 5: eine Prinzipskizze eines Stapels mit zwei Behält- nissen;
- Fig. 6: eine perspektivische Seitenansicht einer Vorrich- tung zum Vereinzeln von mehreren zu einem Stapel ineinander gestapelten Behältnissen in einem ers- ten Verfahrensschritt in einer zweiten Sortier- richtung;
- Fig. 7: eine perspektivische Seitenansicht gemäß Fig. 6 in einem zweiten Verfahrensschritt;
- Fig. 8: eine perspektivische Seitenansicht gemäß Fig. 6 in einem dritten Verfahrensschritt.

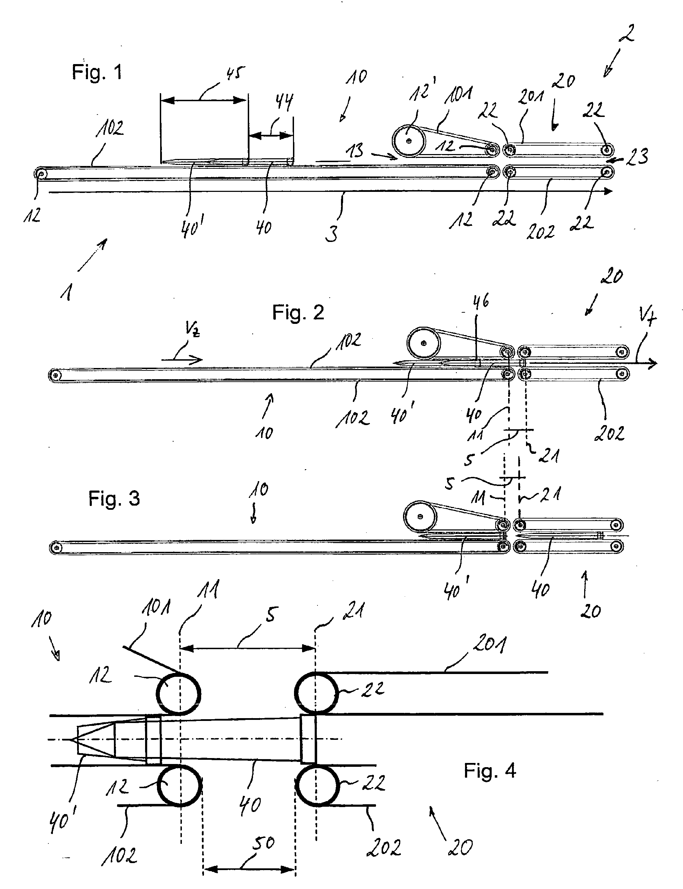

In den **Fig. 1 bis 3** ist eine Vorrichtung zum Vereinzeln von mehreren zu einem Stapel 4 ineinander gestapelten Behältnissen 40,40' zu verschiedenen Zeitpunkten des Vereinzelungsprozess dargestellt. Mit dieser Vorrichtung werden der Stapel 4 beziehungsweise die Behältnisse 40,40' in einer horizontalen Förderrichtung 3 transportiert und dabei wie nachstehend beschrieben vereinzelt. Die Vorrichtung weist eine Zuführeinrichtung 1 mit einem Zuführelement 10 und eine in Förderrichtung 3 hinter der Zuführeinrichtung 1 angeordnete Transporteinrichtung 2 mit einem Transportmittel 20 auf. Durch das Zuführelement 10 wird der Stapel 4 und durch das Transportmittel 20 ein Behältnis 40 nach dem anderen in Förderrichtung 3 transportiert.

Die Zuführelement (10) besteht aus einem oberen und einem unteren jeweils umlaufenden Transportband 101, 102, die zwischeneinander einen Spalt 13 bilden, durch den der Stapel 4 hindurch transportiert wird. Im Spalt 13 laufen die beiden Transportbänder 101, 102 mit gleicher Geschwindigkeit parallel zu der Förderrichtung 3. Hierzu ist jedes Transportband 101, 102 über zwei Umlenkrollen 12 gespannt, die wiederum parallel zur Förderrichtung 3 gelagert sind. Das untere Transportband 102 ist länger als das obere Transportband 101 und dient in dem Bereich, in dem es entgegen der Förderrichtung 3 über das obere Transportband 101 hervorsteht, dazu, den Stapel 4 bis zu dem Spalt 13 zu transportieren.

Ähnlich wie das Zuführelement 10 besteht auch das Transportmittel 20 aus einem oberen und einem unteren jeweils umlaufenden Transportband 201, 202, die zwischen einander einen parallel zur Förderrichtung 3 verlaufenden Spalt 23 bilden und mit gleicher Geschwindigkeit umlaufen. Das jeweilige Transportband 201, 202 ist über zwei Umlenkrollen 22 gespannt, die parallel zur Förderrichtung 3 angeordnet sind. Der Spalt 13 und der Spalt 23 fluchten in Förderrichtung 3.

Zur besseren Übersichtlichkeit der Darstellung ist keine Rahmenstruktur, die die Umlenkrollen 12,22 trägt, dargestellt.

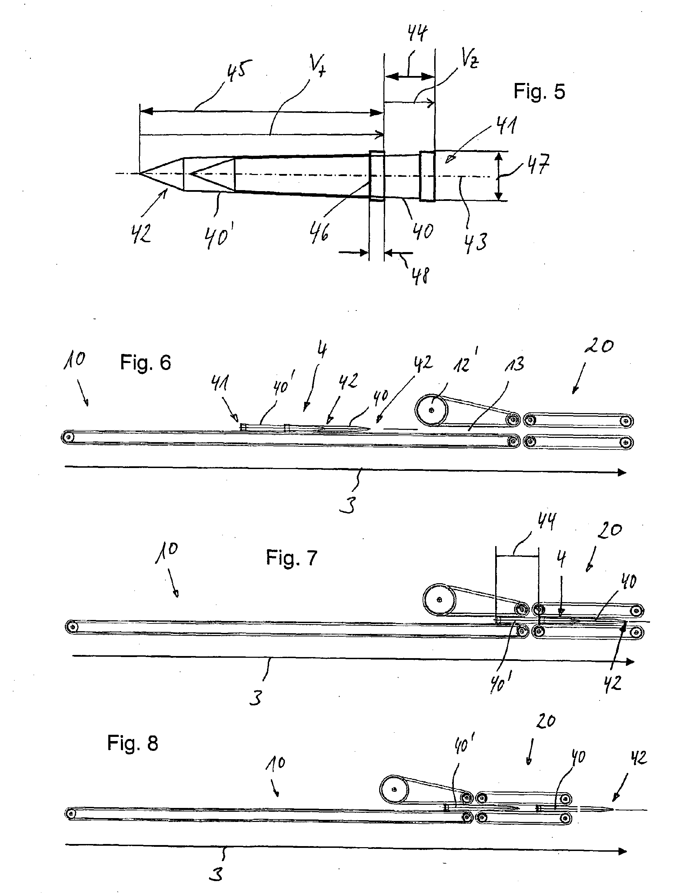

Der in **Fig. 1** **und** **5** dargestellt Stapel 4 umfasst nur beispielhaft ein erstes Behältnis 40 und ein zweites Behältnis 40'. In der Praxis werden auch Stapel 4 mit drei und mehr Behältnissen 40 transportiert und vereinzelt. Alle Behältnisse 40 sind identisch und weisen bezogen auf eine Mittelachse 43 eine offenen Seite 41 und eine der offenen Seite 41 gegenüberliegende zweite geschlossene Seite 42 auf. Die Länge 45 des Behältnisses 40 ist in diesem Ausführungsbeispiel ungefähr um einen Faktor zehn größer als sein Durchmesser 47. Das Behältnis 40 weist eine konische Mantelfläche auf. Im Stapel 4 weisen die Behältnisse 40,40' mindestens einen Abstand 44 auf, sodass die kleinste Gesamtlänge eines Stapels 4 aus n+1 Behältnissen 40 der Summe der Länge 45 eines Behältnisses 40 zuzüglich des n-fachen Betrages des Abstandes 44 entspricht. Sind die Behältnisse 40, 40' nicht vollständig ineinandergesteckt, so kann die Länge 45 auch Größer sein.

In der beschriebenen Vorrichtung können auch gestapelte Behältnisse 40 mit einer anderen Form vereinzelt werden.

Auf der offenen Seite 41 weist das Behältnis 40 einen äußeren Randbereich 46 mit einer Breite 48 auf, in dem das Behältnis 40 den größten Durchmesser 47 hat, sodass die beiden Transportbänder 101 102 des Zuführelements 10 und die Transportbänder 201, 202 des Transportmittels 20 an der Umfangsfläche des Randbereichs 46 reibschlüssig anliegen. Durch die Anlage der Transportbänder 101, 102, 201, 202 im Randbereich 46 wird das Behältnis 40 reibschlüssig in Förderrichtung 3 transportiert. Dieser Randbereich 46 ist im Ausführungsbeispiel ein Bund.

Wie in **Fig. 2** dargestellt ist, wird der Stapel 4 zunächst bis zum Ende des Zuführelements 10 transportiert. Am Ende des Zuführelements 10 wird der Randbereich 46 des Behältnisses 40 an einer ersten Position 11 dadurch frei gegeben, dass dieser aus den beiden Umlenkrollen 12 ausläuft. In dem Moment der Freigabe wird das erste Behältnis 40 nicht mehr ummittelbar durch das Zuführelement 10 transportiert, jedoch noch das zweite Behältnis 40'. Durch das zweite Behältnis 40' wird das erste Behältnis 40 bis zu einer zweiten Position 21 transportiert, in der der Randbereich 46 von dem Transportmittel 20 der Transporteinrichtung 2 erfasst wird. Die erste Position 11 weist gegenüber der zweiten Position 21 einen Abstand 5 auf, in dem das Behältnis 40 bezogen auf den unmittelbaren Antrieb durch die Vorrichtung frei liegt. In diesem Bereich wird das erste Behältnis 40, das in Stapelform in das zweite Behältnis 40' eingesteckt ist durch das zweite Behältnis 40' zum Überbrücken des Abstandes 5 getragen.

Die Vereinzelung wird durch die unterschiedlichen Fördergeschwindigkeiten erreicht, wie durch zwei Vektoren Vz und Vt dargestellt sind. Die Fördergeschwindigkeit Vz des Zuführelements 10 ist in Förderrichtung 3 kleiner als die Fördergeschwindigkeit Vt des Transportmittels 20 in Förderrichtung 3. Durch die unterschiedlichen Fördergeschwindigkeiten wird erreicht, dass das in Förderrichtung 3 vordere erste Behältnis 40 mit dem Moment beginnend, in dem es wie in **Fig. 4** dargestellt ist, durch das Transportmittel 20 erfasst wird, kontinuierlich aus dem hinteren zweiten Behältnis 40' herausgezogen wird. In dem Zeitraum, in dem das zweite Behältnis 40' nun weiter bis zu der zweiten Position 21 transportiert wird, wird das erste Behältnis 40 um das Maß schneller transportiert, um das es in dem zweite Behältnis 40' eingesteckt war.

Das Verhältnis der Fördergeschwindigkeiten Vt/Vz entspricht theoretisch somit wie in **Fig. 5** veranschaulicht mindestens dem Wert 2 abzüglich dem Verhältnis des Abstandes 44 zwischen den beiden Randbereichen 46 im gestapelten Zustand zu der Länge 45 des Behältnisses 40. Das reicht in der Praxis nicht, da die Behältnisse 40, 40' für einen an die Vereinzelung anschließenden Prozess oft noch zueinander beabstandet werden müssen.

In dem Ausführungsbeispiel gemäß **Fig. 3** ist das Verhältnis der Fördergeschwindigkeiten daher größer, sodass das erste Behältnis 40 schon zu dem Zeitpunkt beabstandet zum zweiten Behältnis 40' ist, in dem das zweite Behältnis 40' gerade einmal die ersten Position 11 erreicht hat.

Wesentlich für die Erfindung ist entsprechend **Fig. 4**, dass zwischen der ersten Position 11 und der zweiten Position 21 ein Abstand 5 vorgesehen ist, sodass zwischen dem Zuführelement 10 und dem Transportmittel 20 eine Lücke 50 entsteht. Dadurch greift das Zuführelement 10 nicht gleichzeitig mit dem Transportmittel 20 an dem Randbereich 46 des Behältnisses 40 an. Durch diesem Abstand 5 zwischen den beiden Eingriffspositionen 11,12 entsteht somit kein Schlupf zwischen dem Behältnis 40 und den Transportbändern. Je größer die Breite 48 des Randbereiches 46 ist, desto größer muss der Abstand 5 gewählt werden, damit es nicht zu einem doppelten Eingriff mit dem nachteiligen Schlupf kommt.

In den **Fig. 6 bis 8** werden der Stapel 4 beziehungsweise die Behältnisse 40,40' anders als in der Darstellung nach **Fig. 1 bis 3** mit der geschlossenen zweiten Seite 42 in Förderrichtung 3 voran transportiert. Das Prinzip bei dieser Sortierrichtung der Behältnisse 40,40' ist das Gleiche wie das vorstehend beschriebene. In dem Zeitraum, in dem das zweite Behältnis 40' um das Maß des Abstandes 44 weiter bis zu der zweiten Position 21 transportiert wird, wird das erste Behältnis 40 mindestens um das Maß schneller transportiert, um das es in dem zweite Behältnis 40' eingesteckt war. Das Verhältnis der Fördergeschwindigkeiten Vt/Vz entspricht somit wieder mindestens dem vorstehend beschriebenen Maß.

Damit der Stapel 4 besser in den Spalt 13 des Zuführelements 10 eingefädelt werden kann, weist die obere Umlenkrolle 12' wie in **Fig. 1** **und** **6** näher bezeichnet ist, einen größeren Durchmesser auf als die übrigen Umlenkrollen 12 der Zuführeinrichtung 1. Der Durchmesser dieser Umlenkrolle 12' ist abhängig von dem Durchmesser 47 des Behältnisses 40, je größer der Durchmesser 47 ist, je größer ist die Umlenkrolle 12'.

### Bezugszeichen

- 1: Zuführeinrichtung
- 10: Zuführelement
- 101: Transportband
- 102: Transportband
- 11: erste Position, Eingriffsposition
- 12: Umlenkrolle
- 12': Umlenkrolle
- 13: Spalt
- 2: Transporteinrichtung
- 20: Transportmittel
- 201: Transportband
- 202: Transportband
- 21: zweite Position, Eingriffsposition
- 22: Umlenkrolle
- 23: Spalt
- 3: Förderrichtung
- 4: Stapel
- 40: Behältnis
- 40': Behältnis
- 41: offene Seite
- 42: geschlossene Seite
- 43: Mittelachse
- 44: Abstand
- 45: Länge
- 46: Randbereich
- 47: Durchmesser
- 48: Breite
- 5: Abstand
- 50: Lücke
- Vt: Fördergeschwindigkeit Transportmittel
- Vz: Fördergeschwindigkeit Zuführelement

## Patentansprüche

1. Vorrichtung zum Vereinzeln von mehreren zu einem Stapel (4) ineinander gestapelten Behältnissen (40, 40'), insbesondere von Pipettierspitzen, aufweisend
a) eine Zuführeinrichtung (1) mit einem Zuführelement (10) für den Stapel (4) und
b) eine in einer Förderrichtung (3) hinter der Zuführeinrichtung (1) angeordnete Transporteinrichtung (2) mit einem Transportmittel (20) für das vereinzelte Behältnis (40), wobei
c) das Zuführelement (10) und das Transportmittel (20) in derselben Förderrichtung (3) angeordnet sind, und zwischen einer das Behältnis (40) frei gebenden ersten Position (11), in der das Zuführelement (10) das Behältnis (40) in Förderrichtung (3) frei gibt, und einer das Behältnis (40) erfassenden zweiten Position (21), in der das Transportmittel (20) das Behältnis (40) in Förderrichtung (3) erfasst, ein Abstand (5) vorgesehen ist, **dadurch gekennzeichnet, dass** als Zuführelement (10) und/oder Transportmittel (20) zwei mit gleicher Fördergeschwindigkeit antreibbare und in Bezug auf die Förderrichtung (3) übereinander angeordnete Transportbänder (101, 102, 201, 202) vorgesehen sind.

2. Vorrichtung nach Anspruch 1, **dadurch gekennzeichnet, dass** das Zuführelement (10) und/oder das Transportmittel (20) das Behältnis (40) in Förderrichtung (3) reib- und/oder formschlüssig transportieren.

3. Vorrichtung nach einem der Ansprüche 1 bis 2, **dadurch gekennzeichnet, dass** mindestens je eine Umlenkrolle (12, 22) für das Zuführelement (10) und für das Transportmittel (20) vorgesehen ist und die Umlenkrolle (12) für das Zuführelement (10) in Förderrichtung (3) neben einer Umlenkrolle (22) für das Transportmittel (20) angeordnet ist.

4. Vorrichtung nach Anspruch 4, **dadurch gekennzeichnet, dass** das Behältnis (40) unmittelbar durch die Umlenkrolle (12,22) reib- und/oder formschlüssig in Förderrichtung (3) transportiert werden kann.

5. Vorrichtung nach einem der Ansprüche 1 bis 4, **dadurch gekennzeichnet, dass** die Fördergeschwindigkeit Vt des Transportmittels (20) und die Fördergeschwindigkeit Vz des Zuführelements (10) in Abhängigkeit der Länge (45) des Behältnisses (40) und dem Abstand (44) von jeweils zwei ineinander gestapelten Behältnissen (40, 40') eingestellt werden kann.

6. Vorrichtung nach einem der Ansprüche 1 bis 5 mit einem Stapel (4) von Behältnissen (40), wobei das Behältnis (40) in Bezug zu einer Mittelachse (43) eine offene Seite (41) und eine der offenen Seite (41) gegenüberliegend angeordnete geschlossene Seite (42) und einen in Bezug zu der Mittelachse (43) radial umlaufenden äußeren Randbereich (46) oder äußeren Bund aufweist, wobei das Behältnis (40) im Randbereich (46) oder Bund einen größten äußeren Durchmesser (47) aufweist.

7. Vorrichtung nach Anspruch 6, **dadurch gekennzeichnet, dass** der Randbereich (46) oder Bund eine Breite (48) aufweist, über die der äußere Durchmesser (47) annähernd konstant ist und der Abstand (5) größer ist als die Breite (48) des Randbereiches (46) oder Bundes des Behältnisses (40).

8. Verfahren zum Vereinzeln von Behältnissen (40, 40'), **gekennzeichnet durch** folgende Verfahrensschritte:
a) ein Stapel (4) von mindestens einem ersten und einem zweiten Behältnis (40, 40') wird **durch** ein Zuführelement (10) einer Zuführeinrichtung (1) einer Transporteinrichtung (2) mit einem Transportmittel (20) zugeführt, während der Stapel (4) in Förderrichtung (3) form- und/oder kraftschlüssig mit dem Zuführelement (10) verbunden ist, wobei als Zuführelement (10) und/oder Transportmittel (20) zwei mit gleicher Fördergeschwindigkeit antreibbare und in Bezug auf die Förderrichtung (3) übereinander angeordnete Transportbänder (101, 102, 201, 202) vorgesehen sind,
b) das in Förderrichtung (3) erste Behältnis (40) des Stapels (4) wird von dem Zuführelement (10) frei gegeben,
c) das von dem Zuführelement (10) frei gegebene erste Behältnis (40) wird **durch** das in derselben Förderrichtung (3) folgende zweite Behältnis (40') über einen Abstand (5) zwischen dem Zuführelement (10) und dem Transportmittel (20) weiter in Förderrichtung (3) transportiert,
d) das **durch** das zweite Behältnis (40') weiter transportierte Behältnis (40) wird von dem Transportmittel (20) erfasst und weiter in Förderrichtung (3) transportiert.

9. Verfahren nach Anspruch 8, **dadurch gekennzeichnet, dass** das Behältnis (40) in Förderrichtung (3) über einen äußeren Randbereich (46) oder einen äußeren Bund des Behältnisses (40) form- und/oder kraftschlüssig mit dem Zuführelement (10) oder mit dem Transportmittel (20) in Verbindung steht.

10. Verfahren nach Anspruch 9, **dadurch gekennzeichnet, dass**, während sich der Randbereich (46) des ersten Behältnisses (40) zwischen der frei gebenden ersten Position (11) und der erfassenden zweiten Position (21) befindet, das erste Behältnis (40) in einer Richtung rechtwinklig zur Förderrichtung (3) im zweiten Behältnis (40') gelagert ist.

## Claims

1. A device for separating a plurality of interstacked receptacles (40 40'), more particularly pipette tips, forming a stack (4), comprising
a) a feed unit (1) having a feeder (10) for said stack (4) and
b) a conveyor (2) disposed downstream of said feed unit (1) in the direction of transport (3) and comprising a means of transportation (20) for the separated receptacle (40), wherein
c) said feeder (10) and said means of transportation (20) are disposed in the same direction of transport (3) and there is provided a gap (5) between a first, releasing position (11) in which said feeder (10) releases said receptacle (40) in the direction of transport (3) and a receptacle-catching, second position (21) in which said means of transportation (20) grips said receptacle (40) in the direction of transport (3),
**characterized in that**
said feeder (10) and/or means of transportation (20) consist of two conveyor belts (101, 102; 201, 202) that are capable of being driven at identical delivery rates and are disposed one above the other in relation to said direction of transport (3).

2. The device according to claim 1 **characterized in that** said feeder (10) and/or said means of transportation (20) convey said receptacle (40) frictionally and/or positively in the direction of transport (3).

3. The device according to any one of claims 1 to 2, **characterized in that** at least one deflection roller (12, 22) is provided for said feeder (10) and for said means of transportation (20) and said deflection roller (12) for said feeder (10) is disposed next to a deflection roller (22) for said means of transportation (20) as regarded in the direction of transport (3).

4. The device according to claim 4, **characterized in that** said receptacle (40) can be directly conveyed by said deflection roller (12, 22) frictionally and/or positively in the direction of transport (3).

5. The device according to any one of claims 1 to 4, **characterized in that** the delivery rate Vt of said means of transportation (20) and the delivery rate Vz of said feeder (10) can be adjusted according to the length (45) of said receptacle (40) and the distance (44) between any two interstacked receptacles (40, 40').

6. The device according to any one of claims 1 to 5 comprising a stack (4) of receptacles (40), which receptacle (40) has an open end (41) in the direction of a center axis (43) and a closed end (42) located opposite to said open end (41) and an external marginal area (46) or external collar extending around said center axis (43) at a radial distance therefrom, said receptacle (40) having a maximum outside diameter (47) in said marginal area (46) or collar.

7. The device according to claim 6 **characterized in that** said marginal area (46) or collar has a width (48), across which the outside diameter (47) is approximately constant and said gap (5) is larger than the width (48) of said marginal area (46) or collar of said receptacle (40).

8. A method of separating receptacles (40, 40') **characterized by** the following method steps.
a) a stack (4) of at least a first and a second receptacle (40, 40') is fed by a feeder (10) pertaining to a feed unit (1) of a conveyor (2) comprising a means of transportation (20), while said stack (4) is positively and/or frictionally connected to said feeder (10) in the direction of transport (3), which feeder (10) and/or means of transportation (20) consists of two conveyor belts (101, 102; 201, 202) traveling at identical delivery rates and disposed one above the other in relation to the direction of transport (3),
b) the first receptacle (40) in said stack (4), as regarded in the direction of transport (3), is released by said feeder (10),
c) said first receptacle (40) released by said feeder (10) is further conveyed by the second receptacle (40') following in the same direction of transport (3) across a gap (5) between said feeder (10) and said means of transportation (20) so as to continue moving in the direction of transport (3), and
d) said receptacle (40) further conveyed by said second receptacle (40') is gripped by said means of transportation (20) and further conveyed in the direction of transport (3).

9. The method according to claim 8, **characterized in that** said receptacle (40) is positively and/or frictionally associated with said feeder (10) or with said means of transportation (20) in the direction of transport (3) via an external marginal area (46) or an external collar of said receptacle (40).

10. The method according to claim 9, **characterized in that** while said marginal area (46) of said first receptacle (40) is between said first, releasing position (11) and said second, gripping position (21), said first receptacle (40) lies in a direction at right angles to the direction of transport (3) within said second receptacle (40').

## Revendications

1. Dispositif d'individualisation de plusieurs récipients (40, 40') empilés les uns dans les autres en une pile (4), notamment de pointes de pipettage, présentant :
a) un dispositif d'alimentation (1) comportant un élément d'alimentation (10) de la pile (4) et
b) un dispositif de transport (2) disposé derrière le dispositif d'alimentation (1) dans une direction de transport (3) comportant un moyen de transport (20) du récipient (40) individualisé, dans lequel
c) l'élément d'alimentation (10) et le moyen de transport (20) sont disposés dans la même direction de transport (3), et entre une première position (11) libérant le récipient (40), dans laquelle l'élément d'alimentation (10) libère le récipient (40) dans la direction de transport (3), et une deuxième position (21) saisissant le récipient (40), dans laquelle le moyen de transport (20) saisit le récipient (40) dans la direction de transport (3), un espacement (5) est prévu, **caractérisé en ce que** comme élément d'alimentation (10) et/ou moyen de transport (20) deux bandes de transport (101, 102, 201, 202) disposées l'une au dessus de l'autre par rapport à la direction de transport (3) et pouvant être entraînées à la même vitesse de transport sont prévues.

2. Dispositif selon la revendication 1, **caractérisé en ce que** l'élément d'alimentation (10) et/ou le moyen de transport (20) transportent le récipient (40) dans la direction de transport (3) par conjonction de forme et/ou de friction.

3. Dispositif selon une des revendications 1 çà 2, **caractérisé en ce que** au moins respectivement un rouleau de renvoi (22) est prévu pour l'élément d'alimentation (10) et pour le moyen de transport (20) et le rouleau de renvoi (12) destiné à l'élément d'alimentation (10) est disposé dans la direction de transport (3) à côté d'un rouleau de renvoi (22) destiné au moyen de transport (20).

4. Dispositif selon la revendication 4, **caractérisé en ce que** le récipient (40) peut être transporté directement par l'intermédiaire du rouleau de renvoi (12, 22) par conjonction de forme et/ou de friction dans la direction de transport (3).

5. Dispositif selon une des revendications 1 à 4, **caractérisé en ce que** la vitesse de transport Vt du moyen de transport (20) et la vitesse de transport Vz de l'élément d'alimentation (10) peut être réglée en fonction de la longueur (45) du récipient (40) et de l'espacement (44) de deux réicpients (40, 40') respectivement empilés l'un dans l'autre.

6. Dispositif selon une des revendications 1 à 5 comportant une pile (4) de récipients (40), dans lequel le récipient (40) présente par rapport à un axe central (43) un côté ouvert (41) et un côté fermé (42) disposé en vis-à-vis du côté ouvert (41) et une zone de bord extérieure (46) circonférentielle radialement par rapport à l'axe central (43) ou une collerette extérieure, dans lequel le récipient (40) présente dans la zone de bord (46) ou la collerette un diamètre extérieur (7) plus grand.

7. Dispositif selon la revendication 6, **caractérisé en ce que** la zone de bord (46) ou la collerette présente une largeur (48), par l'intermédiaire de laquelle le diamètre extérieur (47) est approximativement constant et l'espacement (5) est plus grand que la largeur (48) de la zone de bord (46) ou de la collerette du récipient (40).

8. Procédé d'individualisation de récipients (40, 40'), **caractérisé par** les étapes de procédé suivantes :
a) une pile (4) d'au moins un premier et un deuxième récipient (40, 40') est alimenté par un élément d'alimentation (10) d'un dispositif d'alimentation (1) d'un dispositif de transport (2) avec un moyen de transport (20), tandis que la pile (4) est reliée dans la direction de transport (3) à l'élément d'alimentation (10) par conjonction de force et/ou de forme, dans lequel comme élément d'alimentation (10) et/ou moyen de transport (20) deux bandes de transport (101, 102, 201, 202) disposées l'une au dessus de l'autre par rapport à la direction de transport (3) et pouvant être entraînées avec la même vitesse de transport sont prévues,
b) le premier récipient (40) de la pile (4) dans la direction de transport (3) est libéré par l'élément d'alimentation (10),
c) le premier récipient (40) libéré de l'élément d'alimentation (10) est transporté plus loin dans la direction de transport (3) par le deuxième récipient (40') suivant dans la même direction de transport (3) par l'intermédiaire d'un espacement (5) entre l'élément d'alimentation (10) et le moyen de transport (20),
d) le récipient (40) transporté plus loin par le deuxième récipient (40') est saisi par le moyen de transport (20) et transporté plus loin dans la direction de transport (3).

9. Procédé selon la revendication 8, **caractérisé en ce que** le récipient (40) est en liaison dans la direction de transport (3) au dessus d'une zone de bord extérieure (46)ou d'une collerette extérieure du récipient (40) par conjonction de forme et/ou de force avec l'élément d'alimentation (10) ou avec le moyen de transport (20).

10. Procédé selon la revendication 9, **caractérisé en ce que** tandis que la zone de bord (46) du premier récipient (40) se trouve entre la première position de libération (11) et la deuxième position de détection (21), le premier récipient (40) est positionné dans une direction à angle droit par rapport à la direction de transport (3) dans le deuxième récipient (40').
